# EUROPEAN PATENT SPECIFICATION

(11) **EP 4 213 689 B1**
(45) Date of publication and mention of the grant of the patent: **11.09.2024**
(21) Application number: 21766226.1
(22) Date of filing: 31.08.2021
(51) Int. Cl.: A47J 36/10, A47J 43/07

(54) **A FOOD PROCESSOR**
LEBENSMITTELVERARBEITUNGSVORRICHTUNG
ROBOT CULINAIRE

(30) Priority: 21.09.2020 CN 202010998248; 21.09.2020 CN 202022084415 U
(43) Date of publication of application: 26.07.2023
(73) Proprietor: Zhejiang Shaoxing Supor Domestic Electrical Appliance Co., Ltd., Shaoxing, Zhejiang 312017 (CN)
(72) Inventor: WANG, Lu, Shaoxing, Zhejiang 312017 (CN)
(74) Representative: LLR
(86) International application number: PCT/IB2021/057928
(87) International publication number: WO 2022/058826

(56) References cited:
- GB-A- 2 547 683

## Description

### Field

The present application relates to the technical field of small electrical home appliances and relates in particular to a food processor.

### Background

A food processor generally comprises a food processing cup assembly and a food processor base. The food processor base generally comprises an electric motor. The food processing cup assembly comprises a stirring blade assembly, a food processing cup, and a lid. The lid covers the food processing cup. The stirring blade assembly comprises a blade that is driven by the electric motor to rotate in the food processing cup. Thus, the food processor can make soymilk, grind meat, perform juicing, etc. and is adapted to process various kinds of food and convenient to use. As the lid can be opened at will while the food processor is in use with the blade rotating at a high speed, there exists a hazard. GB-A-2 547 683 shows a food processor with a safety device that only allows operation of the food processor when the lid is fitted to the bowl and there is a seal present between the lid and the bowl.

### Summary

The present application discloses a food processor wherein a lid cannot be opened until power is cut off, providing high safety.

To this end, the food processor of the present invention comprises a food processor base provided with a switch assembly and a driving member and a food processing cup assembly removably assembled on the food processor base. It comprises: a food processing cup; a lid for covering the food processing cup and comprising a lid locking portion; a connecting rod comprising a connecting rod body, an abutting portion and a connecting rod locking portion located at opposite ends of the connecting rod body; and a connecting rod locking member. When the lid is placed in position on the food processing cup and the food processing cup assembly is assembled on the food processor base, the lid locking portion presses the connecting rod locking portion to drive the connecting rod to move downward toward the switch assembly, so that the abutting portion triggers the switch assembly to be turned on. When the switch assembly is turned on, the driving member drives the connecting rod locking member to drive the connecting rod to continue to move downward, so that the lid locking portion is locked with the connecting rod locking portion, and the connecting rod locking member is locked with the connecting rod. By those provisions, the lid locking portion cooperates with the connecting rod locking portion to cause the connecting rod to move downward to trigger the switch assembly to be turned on, which causes the driving member to drive the connecting rod locking member to make the connecting rod continue to move downward, resulting finally in a locking between the lid locking portion and the connecting rod locking portion and a locking between the connecting rod locking member and the connecting rod.

Thus, during the course of operation of the food processor, the lid, the food processing cup, and the food processor base are locked as a whole and the lid cannot be opened unless the food processor is powered off. Thus, safety during the course of operation of the food processor is increased, achieving the objective of safety protection. In addition, compared to some approaches wherein only the lid is locked with the food processing cup, it is safer because the whole is locked; secondly, with the double course (the downward movement of the connecting rod to trigger the switch assembly and the continued downward movement that causes the locking between the lid locking portion and the connecting rod locking portion and the locking between the connecting rod and the connecting rod locking member) being achieved by one connecting rod, all tolerances and errors are concentrated on one connecting rod, thus the connecting rod operates in a more accurate way such that the cooperation between the connecting rod, the connecting rod locking member, the lid, and the switch assembly is better controlled, which in turn leads to a more accurate locking between the lid, the food processing cup, and the food processor base; finally, with regards to utilization experience, the food processing cup assembly without the lid can be first placed as a whole on the food processor base and then covered by the lid so as to achieve the overall locking, alternatively, the food processing cup assembly can be placed on the food processor base after the lid covers the food processing cup, providing flexible utilization and good utilization experience while ensuring good safety protection.

Optionally, the food processor further comprises a cup holder assembly assembled with the food processing cup and comprising a cup holder, wherein the connecting rod locking member is assembled to the cup holder, or the cup holder comprises a receiving portion for accommodating the connecting rod locking member connected with the driving member.

Optionally, the connecting rod body is provided with a locking hole through the connecting rod body, the connecting rod locking member comprises a first guiding surface inclined downward with respect to the locking hole, the connecting rod locking member is configured to be pushed by the driving member to move in a horizontal direction such that the first guiding surface moves into the locking hole makes the connecting rod continue to move downward. By those provisions, with a simple structure, double functions of guiding and locking are achieved by the cooperation between the first guiding surface and the locking hole, and the connecting rod locking member is locked more easily with the connecting rod.

Optionally, the first guiding surface is inclined at an angle of 15 degrees to 60 degrees with respect to a horizontal plane. Those provisions help improve the reliability of the locking between the connecting rod, the lid, and the connecting rod locking member and thus improve the reliability of the locking of the food processing cup and the reliability of the safety protection, because generally, if the angle is too small or too big, the following situations may occur: if the angle is relatively small, the connecting rod locking member has been locked with the connecting rod while the lid locking portion has not been locked with the connecting rod locking portion; if the angle is too big, not only will it be difficult for the first guiding surface to be guided into the locking hole, but also the lid locking portion will have been locked with the connecting rod locking portion while the connecting rod locking member has not been locked with the connecting rod.

Optionally, a locking member return spring is provided between the cup holder and the connecting rod locking member and configured to be compressed when the connecting rod locking member is in a locked state and to exert a force to the connecting rod locking member after the driving member is powered off to reset the connecting rod locking member; and/or, a connecting rod return spring is provided between the connecting rod locking member and the connecting rod body and configured to be compressed when the connecting rod is locked and to exert a force to the connecting rod to reset the connecting rod when the connecting rod locking member is reset. By those provisions, the connecting rod locking member is reset by the locking member return spring after the driving member is powered off, leading to an improved convenience of the safety protection, and/or, the connecting rod is reset by the connecting rod return spring, also leading to an improved convenience of the safety protection. In particular, in the case where both the connecting rod return spring and the locking member return spring are comprised, the entire locking process and unlocking process are completed automatically, providing good user experience.

Optionally, the food processing cup is provided at its side wall with a guide protrusion, and the connecting rod body is provided with a connecting rod slot, the guide protrusion being located in the connecting rod slot, the connecting rod slot having a length in the direction of the length of the connecting rod body greater than that of the guide protrusion in the direction of the length of the connecting rod body, the connecting rod being movable relative to the guide protrusion to be guided by the guide protrusion; and/or, the connecting rod locking member is provided with a through hole, and the abutting portion passes through the through hole. With those provisions, the movement of the connecting rod in the vertical direction is rendered more stable under the guiding of the guide protrusion, thus the abutting portion triggers more accurately the switch lever of the switch assembly and the turn-on accuracy of the switch assembly is high. In addition, a more stable movement of the connecting rod also renders the relative position relationship between the lid locking portion and the connecting rod locking portion more accurate and therefore, the accuracy of the locking between the two is higher. In sum, the cooperation between the guide protrusion and the connecting rod slot improves the reliability of the safety protection. In addition, in the case where the through hole is provided, the through hole can also perform the function of guiding and is able to improve the turn-on accuracy of the switch assembly and the reliability of the safety protection. Of course, when both are provided, the reliability of the safety protection can be further improved.

Optionally, the connecting rod body contacts a side wall of the food processing cup so as to move along the side wall of the food processing cup. By those provisions, the connecting rod is supported by the side wall of the food processing cup, leading to an improved reliability of the downward or upward movement of the connecting rod, which makes the abutting portion of the connecting rod more accurately come into contact with the switch lever and the lid locking portion easily lock the connecting rod locking portion, thereby further improving the turn-on accuracy of the switch assembly and the accuracy of the locking between the lid locking portion and the connecting rod locking portion, leading to an improved reliability of the safety protection.

Optionally, the lid comprises a lid body, and the lid locking portion comprises a lid connecting portion connected to the lid body and a lid hook portion connected to the lid connecting portion; the connecting rod locking portion comprises a connecting rod hook portion and a guiding portion both connected to the connecting rod body and spaced apart to form a groove extending in the direction of the width of the connecting rod body, the guiding portion comprises a second guiding surface inclined upward from a horizontal plane, and the lid hook portion is configured to be guided by the second guiding surface into the groove; the connecting rod hook portion comprises a recess in communication with the groove, and when the connecting rod is locked, the lid hook portion extends into the recess. By those provisions, the lid is prevented from revolving by the guiding of the second guiding surface of the guiding portion and the position limiting of the recess, thus it is easier to achieve a locking between the lid locking portion and the connecting rod locking portion and to make the locking stable, improving the reliability of the safety protection.

Optionally, the groove has a width L1, and the lid hook portion has a height L2 relative to an end of the lid connecting portion, wherein 0 < L1 - L2 ≤ 3 mm. Those provisions help improve the reliability of the safety protection because in general, if the difference between L1 and L2 is too big, during the course of the locking of the connecting rod by the connecting rod locking member, the course of the downward movement of the connecting rod will be relatively long, thus the course of the driving member will also become longer due to the fact that the connecting rod is driven to move downward through the inclined surface cooperation, which will cause the locking between the connecting rod locking portion and the lid locking portion to be inaccurate and thus preventing the lid hook portion of the lid locking portion from correctly entering the recess.

Optionally, the width L1 of the groove satisfies: 2 mm ≤ L1 ≤ 8 mm. With those provisions, the lid locking portion and the connecting rod locking portion will be engaged by a force that is not too small, thus it will not be easy to break or disengage, and the locking can be rendered stable.

Optionally, the second guiding surface is inclined at an angle of 15 degrees to 60 degrees with respect to a horizontal plane. Those provisions help improve the reliability of the connection between the connecting rod and the switch assembly and the reliability of the locking between the connecting rod, the lid and the connecting rod locking member, and help improve the reliability of the safety protection, because in general, if the angle is too small, the lid locking portion will have been locked with the connecting rod locking portion while the abutting portion of the connecting rod has not yet abutted against the switch lever of the switch assembly to turn on the switch assembly, in other words, not yet triggered the second course; if the angle is too big, not only will it be difficult for the lid locking portion to be guided into the connecting rod locking portion, but also the lid locking portion and the connecting rod locking portion will not have been locked in place while the abutting portion of the connecting rod has already triggered the second course.

Optionally, the food processing cup comprises a cup mouth located at an opening portion of the food processing cup, the cup mouth and the connecting rod locking portion being located at two ends of a diameter of the opening portion of the food processing cup; and, the lid comprises a lid body and a cup mouth hook provided on the edge of the lid body and configured to be buckled with the cup mouth. With those provisions, by the hooking between the cup mouth hook and the cup mouth and with the cup mouth and the connecting rod locking portion being located at two ends of one diameter of the opening portion of the food processing cup, the lid and the food processing cup can be better fixed and in particular, when the lid is a steamer, the steamer can be better fixed.

Optionally, the food processing cup comprises a lug located at the opening portion of the food processing cup, wherein a line connecting the lug, the cup mouth and the connecting rod locking portion in sequence form a polygon, the lid comprises a lug hook provided at the lid body, the lug hook comprises a lug connecting portion connected with the lid body and a reverse-folded portion facing the lug connecting portion, when the lug is buckled with the lug hook, a top surface of the lug fits the lug connecting portion, and a back surface of the lug is spaced apart from the reverse-folded portion. With those provisions, by the cooperation between the lug hook and the lug, between the cup mouth hook and the cup mouth, and between the lid locking portion and the connecting rod locking portion, at least three fixing points are formed along the periphery of the food processing cup, which allows to better fix the lid. In addition, with the lug and the reverse-folded portion being spaced apart, it is easier for the lid to be screwed in or screwed out, facilitating utilization while ensuring stability. In particular, in the case where the lid is a steamer, the cooperation between the above-described structure and the water-retaining rib can better concentrate steam inside the steamer, improving food steaming results.

Optionally, the food processing cup comprises a lug located at an opening portion of the food processing cup, and the lid comprises a lug hook that comprises a lug connecting portion located at an edge of the lid and a reverse-folded portion facing the lug connecting portion; when the lug is buckled with the lug hook, a top surface of the lug fits the lug connecting portion, and a back surface of the lug is spaced apart from the reverse-folded portion so as to fix the lid jointly with the lid locking portion and the connecting rod locking portion. With those provisions, by the cooperation between the lug hook and the lug and between the lid locking portion and the connecting rod locking portion, for example, when there are at least two lug hooks and lugs, at least three fixing points are formed along the periphery of the food processing cup, enabling better fixation of the lid. In addition, with the lug and the reverse-folded portion being spaced apart, it is easier for the lid to be screwed in or screwed out, facilitating utilization while ensuring stability. In particular, in the case where the lid is a steamer, the cooperation between the above-described structure and the water-retaining rib allows to better concentrate steam inside the steamer, improving food steaming results.

Optionally, the back face of the lug is spaced apart from the reverse-folded portion by a distance H2, wherein 0 < H2 ≤ 5 mm. The function of fixing the lid in the vertical direction can be well fulfilled while facilitating the screwing in and out of the lid.

Optionally, the lid is or comprises a steamer having a steamer body and a water-retaining rib all around the steamer body, the water-retaining rib being configured to be buckled to the opening portion of the food processing cup and having a height of 1 mm to 50 mm relative to the steamer body. With those provisions, the water-retaining rib can make water condensed from water vapor return to the inside of the food processing cup, and the buckling between the water-retaining rib and the opening portion of the food processing cup can also fix the steamer on the food processing cup, improving the stability of the steamer. Especially when the height is 1 mm to 50 mm, not only can the stability be improved but also the strength of the water-retaining rib can be ensured.

### Description of the Drawings

Figure 1 is an exploded view in perspective of a first food processor of the present application;
Figure 2 is an exploded view in perspective of the food processing cup assembly of the first food processor of the present application;
Figure 3 is a view in perspective of a connecting rod;
Figure 4 is a main view of the connecting rod shown in Figure 3;
Figure 5 is a sectional view of the food processor when not covered by the lid;
Figure 6 is a partial enlarged view of the A part in Figure 5;
Figure 7 is a sectional view of the food processor from another angle when covered by the lid;
Figure 8 is a partial enlarged view of the B part in Figure 7;
Figure 9 is a partial enlarged view of the C part in Figure 7;
Figure 10 is a sectional view of the food processor from another angle when covered by the lid;
Figure 11 is a partial enlarged view of the D part in Figure 10;
Figure 12 is an exploded view in perspective of a second food processor;
Figure 13 is a sectional view of the second food processor from an angle;
Figure 14 is a partial enlarged view of the E part in Figure 13;
Figure 15 is a sectional view of the second food processor from another angle;
Figure 16 is a partial enlarged view of the F part in Figure 15.

### Detailed Description of the Embodiments

Exemplary modes of realization are described in detail herein and illustrated by way of example in the drawings. When the description below refers to the drawings, unless otherwise indicated, the same references in different drawings represent the same or similar elements. The modes of realization described in the following exemplary modes of realization do not represent all the modes of realization conform with the present application. To the contrary, they are merely examples of means conform with some aspects of the present application described in detail in the appended claims.

The terms used in the present application are merely for the purpose of describing specific modes of realization, and not intended to limit the present application. Unless otherwise defined, the technical terms or scientific terms used in the present application shall have the common meaning as understood by a person of ordinary skills in the art to which the present application belongs. Terms such as "one" or "a(n)" and the like used in the specification and claims of the present application do not represent a numerical limitation but mean that there exists at least one. Terms such as "comprise" or "include" and the like are intended to mean that the element or object that appears before "comprise" or "include" includes the element or object that appears after "comprise" or "include" or its equivalent, and do not exclude other elements or objects. Terms such as "linked" or "connected" and the like are not limited to a physical or mechanical connection, but can include an electrical connection, whether direct or indirect. "A plurality of" includes two and is equivalent to "at least two." Singular forms such as "alan," "said," and "the" used in the specification and the appended claims of the present application are also meant to include the plural form, unless the context clearly indicates otherwise. It should also be understood that terms such as "and/or" used herein mean and include any or all possible combinations of one or more related items listed.

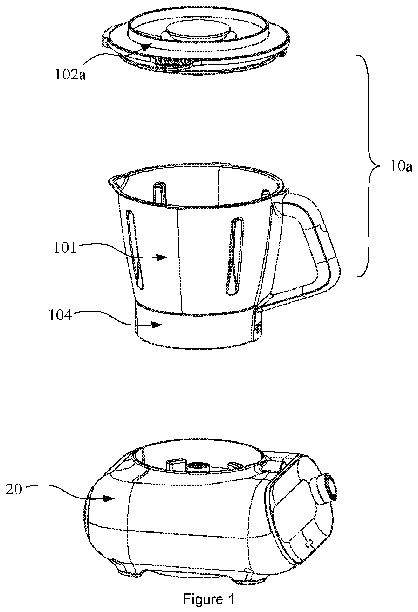

In reference to Figures 1, 2, 8, and 10, a food processor comprises a food processing cup assembly 10a and a food processor base 20. The food processing cup assembly 10a is fitted to the food processor base 20 to achieve functions of the food processor. The food processor base 20 comprises a switch assembly 201 and a driving member 202. The switch assembly 201 can be any switch assembly, such as a micro switch. The switch assembly 201 comprises a switch lever 2011 and a switch contact 2012. The driving member 202 is a part able to cause a connecting rod locking member 1042 to move in a horizontal direction, for example, a combination of an electromagnetic valve and a cylinder. In some modes of realization, it can comprise only a telescopic cylinder. Modes of realization of the present application are described below using the combination of an electromagnetic valve and a cylinder as an example. The electromagnetic valve is connected to the cylinder, and the cylinder is connected with a connecting block 203 through which it drives the connecting rod locking member 1042.

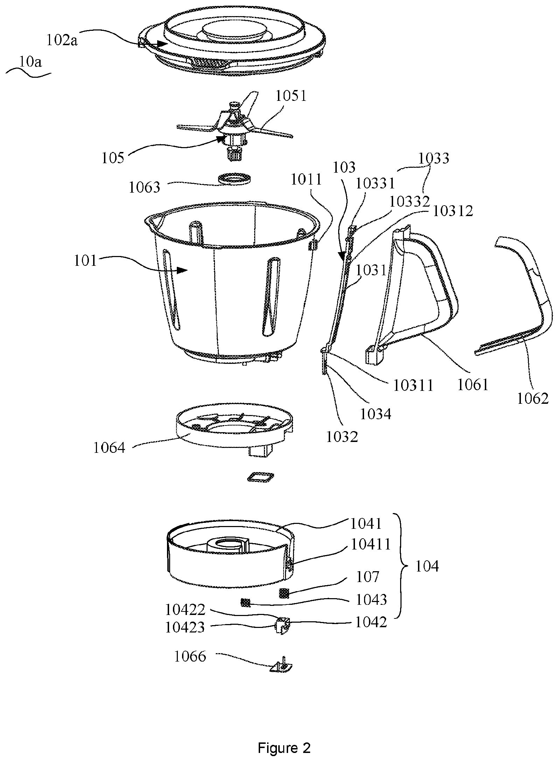

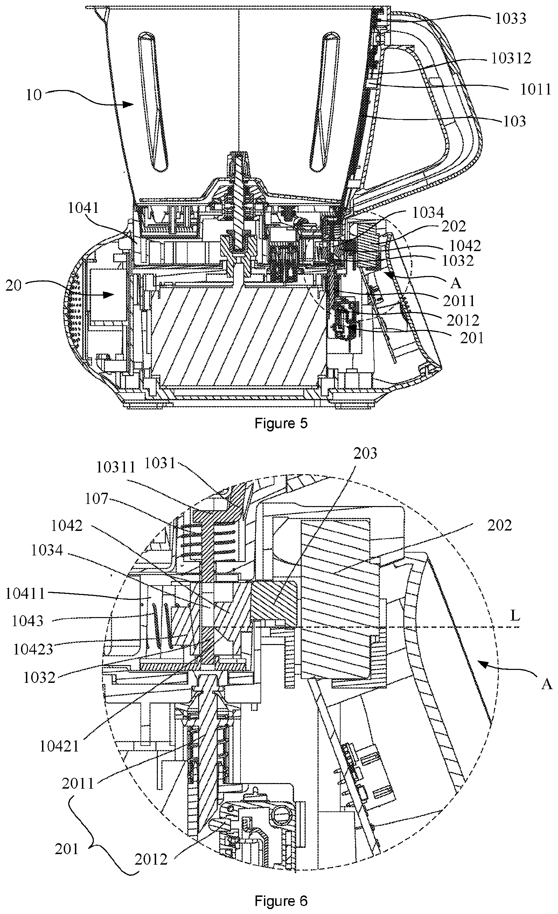

The food processing cup assembly 10a comprises a food processing cup 101, a lid, a connecting rod 103, a cup holder assembly 104, and a stirring blade assembly 105. The lid comprises a cup lid 102a or a steamer 102b. In other words, one of the cup lid 102a and the steamer 102b can be chosen to cover the food processing cup 101 to achieve a function of the food processor. For example, in the case where the food processing cup 101 is covered by the steamer 102b, food can be steamed; and in the case where the food processing cup 101 is covered by the cup lid 102a, functions such as soymilk making can be performed. In Figure 2 and in combination with Figures 5, 7, and 10, the lid is the cup lid 102a. The cup lid 102a covers the food processing cup 101 and comprises a cup lid body 1021 a (for ease of description, below, the lid body is referred to as a cup lid body when the lid is the cup lid 102a and as a steamer body when the lid is the steamer 102b) and a lid locking portion 1022a (similarly, for ease of description, the lid locking portion is referred to as a cup lid locking portion when the lid is the cup lid 102a and as a steamer locking portion when the lid is the steamer 102b) located at the edge of the cup lid body (i.e., the edge of the cup lid). In some modes of realization, the food processing cup 101 comprises a handle body 1061 and a handle housing 1062. The handle body 1061 and the handle housing 1062 form a handle assembly. Of course, the handle assembly can be of another configuration. In some modes of realization, the food processing cup 101 may not comprise the handle 1061 or the handle housing 1062, i.e., not comprise the handle assembly. The food processing cup assembly 10a further comprises a sealing ring 1063, an upper coupler 1064 (comprising a coupler and a support for mounting the coupler), and a cup lid plate 1066, etc. Conventional means can be used to assemble those parts and are not described herein. The connecting rod 103 is assembled to the food processing cup 101. That is, it can be assembled to a side wall of the food processing cup 101 (which can be understood as the body of the food processing cup) or to the handle assembly. The connecting rod 103 comprises a connecting rod body 1031, as well as an abutting portion 1032 and a connecting rod locking portion 1033 located at opposite ends of the connecting rod body 1031. The cup holder assembly 104 is assembled with the food processing cup 101 and comprises a cup holder 1041 and a connecting rod locking member 1042 assembled to the cup holder 1041. The stirring blade assembly 105 comprises a blade 1051.

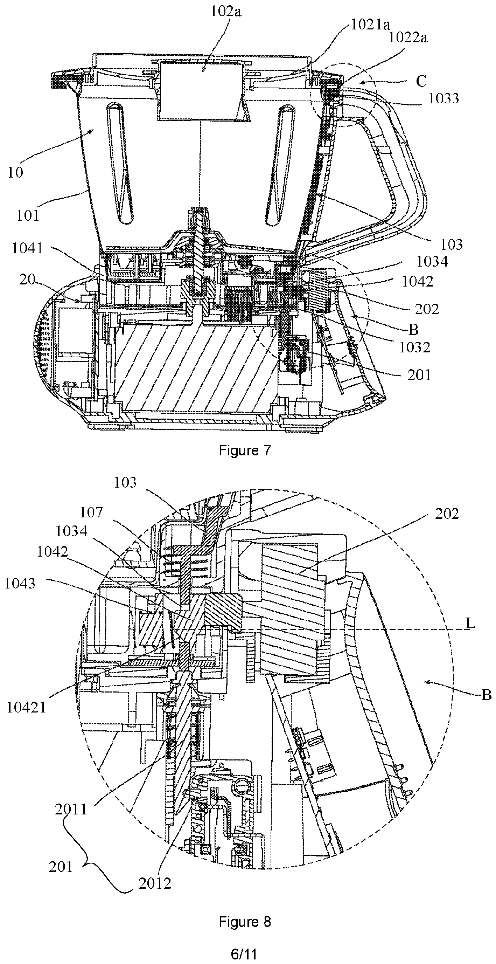

In reference to Figures 2 and 5 to 11, the operating process of the food processor is described below using an example in which the connecting rod 103 is assembled to a side wall of the food processing cup 101: Figures 5 and 6 schematically show the state of the switch assembly 201, the connecting rod locking member 1042, and the connecting rod 103 when the cup lid 102a has not covered. In this state, as shown in Figure 6, the connecting rod locking member 1042 has not locked the connecting rod 103 and the connecting rod 103 has not moved downward. Figures 7 to 11 schematically show the state after the cup lid 102a has covered. After the cup lid 102a is screwed to cover, the cup lid locking portion 1022a abuts and presses against the connecting rod locking portion 1033 so as to cause the connecting rod 103 to move downward toward the switch assembly 201, the abutting portion 1032 abuts against the switch lever 2011 of the switch assembly 201, and the switch lever 2011 moves downward to abut against the switch contact 2012. Thus, the switch assembly 201 is turned on. A power source of the food processor base 20 powers the driving member 202. Thus, the driving member 202 drives the connecting rod locking member 1042 which drives the connecting rod 103 to continue to move downward, until the cup lid locking portion 1022a is locked with the connecting rod locking portion 1033 and the connecting rod locking member 1042 is locked with the connecting rod 103. Therefore, the cup lid 102a, the food processing cup 101, and the food processor base 20 are locked as a whole. After the locking, during the course of operation of the food processor, the cup lid 102a cannot be opened, improving safety and achieving the objective of safety protection. When the cup lid 102a needs to be opened, one first turns off the power of the food processor and disconnects the switch assembly 201. Thus, the driving member 202 no longer controls the connecting rod locking member 1042, which no longer locks the connecting rod 103, and the cup lid locking portion 1022a is no longer locked with the connecting rod locking portion 1033. In the above-described process, there is a certain delay in time between the powering off and the opening of the cup lid 102a. Therefore, by the time when a consumer opens the cup lid 102a, the blade 1051 of the stirring blade assembly 105 has completely stopped rotating, thus the consumer will not be injured by the stirring blade assembly 105 when opening the cup lid 102a, improving safety and achieving the objective of safety protection. In addition, compared to some approaches in which only the cup lid and the food processing cup are locked, as the whole is locked, it is safer. Secondly, with the double course achieved by one connecting rod, all tolerances and errors are concentrated on one connecting rod, thus the connecting rod operates in a more accurate way such that the cooperation relationship between the connecting rod, the connecting rod locking member, the cup lid (the lid), and the switch assembly is better controlled, which in turn leads to a more accurate locking between the lid, the food processing cup, and the food processor base. In the above-described process, the connecting rod 103 will move downward under the action of the cup lid locking portion 1022a, which will be referred to below as the first course for ease of description; after the switch assembly 201 is triggered, the connecting rod 103 will continue to move downward under the action of the driving member 202 and the connecting rod locking member 1042, which will be referred to below as the second course for ease of description.

In reference to Figures 5 to 8, the connecting rod locking member 1042 can cause the connecting rod 103 to move downward in many ways, for example, by means of some ways and structures that transform a linear movement into a downward movement. In some modes of realization, the connecting rod body 1031 is provided with a locking hole 1034 through the connecting rod body 1031. The connecting rod locking member 1042 comprises a first guiding surface 10421 inclined downward with respect to the locking hole 1034. How the switch assembly 201 and the driving member 202 are triggered is as described above and will not be described again. As shown in Figures 6 and 8, after the driving member 202 is powered, a piston rod of the driving member 202 extends, and the connecting rod locking member 1042 is pushed by the driving member 202 to move in a horizontal direction (in Figures 6 and 8, to move to the left of the figures). The fact that the connecting rod locking member 1042 moves to the left causes the first guiding surface 10421 to move towards the inside of the locking hole 1034. For example, the first guiding surface 10421 moves towards the inside of the locking hole 1034 while abutting against the side wall of the locking hole 1034, and thus causes the connecting rod 103 to move downward in Figures 6 and 8. The downward movement of the connecting rod 103 causes the cup lid locking portion 1022a and the connecting rod locking portion 1033 to lock with each other. By those provisions, with a simple structure, double functions of guiding and locking are achieved by the cooperation between the first guiding surface 10421 and the locking hole 1034, and the connecting rod locking member is locked more easily with the connecting rod.

Still in reference to Figures 6 and 8, the first guiding surface 10421 is inclined at an angle that is provided based on needs. In some modes of realization, the first guiding surface 10421 is inclined at an angle of 15 degrees to 60 degrees with respect to a horizontal plane L, for example, 15 degrees, 18 degrees, 20 degrees, 22 degrees, 25 degrees, 26 degrees, 30 degrees, 31 degrees, 35 degrees, 37 degrees, 40 degrees, 42 degrees, 45 degrees, 46 degrees, 50 degrees, 52 degrees, 55 degrees, 56 degrees, or 60 degrees. If the angle is too small or too big, the following situations may occur: if the angle is relatively small, the connecting rod locking member 1042 has already locked with the connecting rod 103 while the cup lid locking portion 1022a has not locked with the connecting rod locking portion 1033; if the angle is too big, not only will it be difficult for the first guiding surface 10421 to be guided into the locking hole 1034, but also the cup lid locking portion 1022a may have already locked with the connecting rod locking portion 1033 when the connecting rod locking member 1042 has not locked with the connecting rod 103. In sum, with the first guiding surface 10421 inclined at 15 degrees to 60 degrees, the cooperation between the connecting rod 103, the cup lid 102a (the lid), and the connecting rod locking member 1042 can be improved, improving the reliability of the locking, which helps improve the reliability of the safety protection.

Still in reference to Figures 6 and 8, in some modes of realization, a locking member return spring 1043 is provided between the cup holder 1041 and the connecting rod locking member 1042. The locking member return spring 1043 is compressed when the connecting rod 103 is locked, and exerts a force to the connecting rod locking member 1042 after the driving member 202 is powered off to reset the connecting rod locking member 1042. In reference to Figures 6 and 8 in combination with Figure 2, the connecting rod locking member 1042 is provided with a spring mounting portion 10423, and the cup holder 1041 is provided at its edge with a spring accommodating chamber 10411. The locking member return spring 1043 is sleeved to the spring mounting portion 10423 and located inside the spring accommodating chamber 10411. When the driving member 202 (the electromagnetic valve) is powered and the piston rod of the driving member 202 extends, causing the connecting rod locking member 1042 to lock with the connecting rod 103, the locking member return spring 1043 is compressed by the connecting rod locking member 1042. The state in which the locking member return spring 1043 is compressed and the connecting rod 103 is locked is shown in Figures 7 and 8.

When the driving member 202 is powered off (the electromagnetic valve is powered off), the piston rod of the driving member 202 retreats and the locking member return spring 1043 exerts an elastic force to the connecting rod locking member 1042, causing the connecting rod locking member 1042 to move to the right in Figures 5 and 8 until it is reset. The state in which the locking member return spring 1043 and the connecting rod locking member 1042 have been reset is shown in Figures 5 and 6. By those provisions, wherein the connecting rod locking member 1042 is reset by the locking member return spring 1043 after the driving member 202 is powered off, the convenience of the safety protection is improved. In addition, the connecting rod locking member 1042 cannot be reset unless power is turned off. Therefore, it also improves the reliability of the safety protection. Moreover, since the connecting rod locking member 1042 is reset by the locking member return spring 1043 after power is turned off, which in turn leads to the unlocking of the connecting rod 103, the unlocking of the connecting rod 103 is facilitated. A person skilled in the art can understand that, there are many different structures for providing the locking member return spring 1043 between the connecting rod locking member 1042 and the cup holder 1041, which are not limited to what is described above. For example, the cup holder 1041 can be provided with the spring mounting portion 10423 while the connecting rod locking member 1042 is provided with the spring accommodating chamber 10411. In some modes of realization, the driving member 202 comprises a cylinder but is not provided with an electromagnetic valve, a delay circuit is provided in the controller of the food processor, and the connecting rod locking member 1042 is connected to a piston rod of the cylinder. After the food processor is powered off, during the delay of the delay circuit, the piston rod of the cylinder drives the connecting rod locking member 1042 to reset. In this case, the locking member return spring 1043 may be omitted.

Still in reference to Figures 5 to 8, a connecting rod return spring 107 is provided between the connecting rod locking member 1042 and the connecting rod body 1031. When the connecting rod locking member 1042 is reset, the connecting rod return spring 107 exerts a force to the connecting rod 103 to reset the connecting rod 103. In Figures 5 to 8, the connecting rod body 1031 comprises a folded portion 10311. The connecting rod return spring 107 is sleeved to the connecting rod body 1031 and its two ends abut respectively against the folded portion 10311 and the outer wall of the spring accommodating chamber 10411. A person skilled in the art can understand that the connecting rod return spring 107 can be provided between the cup holder 1041 and the connecting rod body 1031 in another way. After the connecting rod locking member 1042 is unlocked, in other words, after the first guiding surface 10421 exits the locking hole 1034 (in other words, the connecting rod locking member 1042 is reset), the connecting rod 103 moves upwards under the effect of the elastic force of the connecting rod return spring 107 until the connecting rod 103 is reset. The state in which the connecting rod return spring 107 and the connecting rod 103 have been reset is shown in Figures 5 and 6. When the cup lid locking portion 1022a presses against the connecting rod locking portion 1033, causing the connecting rod 103 to move downward towards the switch assembly 201 until the connecting rod 10 is locked by the connecting rod locking member 1042, the connecting rod return spring 107 is compressed. The state in which the connecting rod return spring 107 is compressed is shown in Figures 7 and 8. By those provisions, wherein the connecting rod 103 is reset under the action of the connecting rod return spring 107 after the connecting rod locking member 1042 is unlocked, not only is the unlocking of the connecting rod 103 convenient, but also the unlocking of the connecting rod locking member 1042 and the unlocking of the connecting rod 103 can be accomplished one after the other, all while ensuring the safety protection. Further, the unlocking between the cup lid 102a and the food processing cup 101 and the unlocking between the food processing cup 101 and the food processor base 20 can be accomplished one after the other simply by turning off power, improving the convenience of utilization of the food processor. In some other modes of realization, the connecting rod return spring 107 can be omitted. For example, the connecting rod 103 is provided with a supporting bar. The supporting bar moves with the movement of the connecting rod 103, and during the course of the connecting rod locking portion 1033's downward movement caused by the cup lid locking portion 1022a, moves downward. After the connecting rod locking member 1042 is unlocked, the connecting rod 103 is reset by lifting upward the supporting bar.

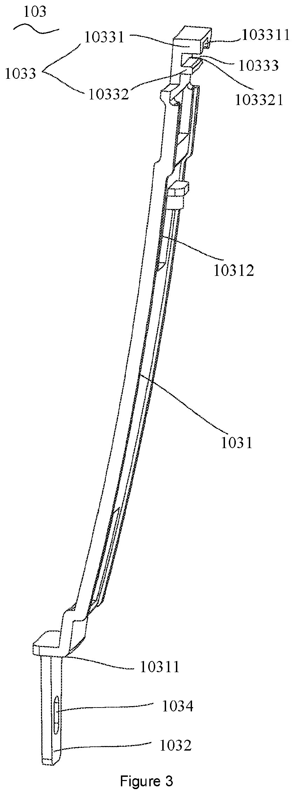

In reference to Figures 2 to 4, in some modes of realization, a side wall of the food processing cup 101 is provided with a guide protrusion 1011, and the connecting rod body 1031 is provided with a connecting rod slot 10312. The connecting rod slot 10312 has a length in the direction of the length of the connecting rod body 1031 greater than that of the guide protrusion 1011 in the direction of the length of the connecting rod body 1031. The connecting rod 103 moves relative to the guide protrusion 1011 to be guided by the guide protrusion 1011 during the course of the downward movement of the connecting rod 103 when pushed by the cup lid locking portion 1022a. With those provisions, thanks to the guiding of the guide protrusion 1011, the movement of the connecting rod 103 in the vertical direction is more stable, and thus, the abutting portion 1032 more accurately triggers the switch lever 2011 of the switch assembly 201, resulting in high turn-on accuracy of the switch assembly 201. In addition, the movement of the connecting rod 103 being more stable further renders the relative position relationship between the cup lid locking portion 1022a and the connecting rod locking portion 1033 more accurate and therefore improves the accuracy of the locking between the two. In sum, the cooperation between the guide protrusion 1011 and the connecting rod slot 10312 improves the reliability of the safety protection.

In reference to Figures 2, 6, and 8, in some modes of realization, the connecting rod locking member 1042 is provided with a through hole 10422 through the connecting rod locking member 1042, and the abutting portion 1032 passes through the through hole 10422. By those provisions, wherein the abutting portion 1032 passes through the through hole 10422, during the course of the upward or downward movement of the connecting rod 103, the connecting rod 103 is limited by the through hole 10422 to move upwards or downwards. For example, in the event that the connecting rod return spring 107 is provided, the connecting rod 103 is limited by the through hole 10422 to move upwards under the action of the connecting rod return spring 107. Therefore, the turn-on accuracy of the switch assembly 201 can be improved, improving the reliability of the safety protection. In addition, the movement of the connecting rod 103 in the vertical direction is more stable, and thus, the relative position relationship between the cup lid locking portion 1022a and the connecting rod locking portion 1033 is rendered more accurate, improving the accuracy of the locking between the two. A person skilled in the art can understand that, in the case where the through hole 10422, the guide protrusion 1011, and the connecting rod slot 10312 are provided, as both ends of the connecting rod 103 are guided, the turn-on accuracy of the switch assembly 201 and the accuracy of the locking between the cup lid locking portion 1022a and the connecting rod locking portion 1033 can be further improved, improving the reliability of the safety protection. In addition, in the case where the connecting rod locking member 1042 is provided with the through hole 10422, the connecting rod locking member 1042 has a relatively large volume, and therefore, the area of contact between the piston rod of the driving member 202 and the connecting rod locking member 1042 is larger, rendering the contact more accurate and making it easier for the connecting rod locking member 1042 to be locked with the connecting rod 103.

In reference to Figures 2, 5, and 7, in some modes of realization, the connecting rod body 1031 is in contact with a side wall of the food processing cup 101 to move along the side wall of the food processing cup 101. For example, as shown in Figures 2, 5, and 7, the food processing cup 101 is of a shape that is larger at the top than at the bottom and has a curved side wall. The connecting rod body 1031 is also curved with a curved face. Its degree of curvature is identical to that of the side wall of the food processing cup 101. By those provisions, wherein the connecting rod 103 is supported by the side wall of the food processing cup 101, the stability of the downward or upward movement of the connecting rod 103 can be improved so that the abutting portion 1032 of the connecting rod 103 more accurately comes into contact with the switch lever 2011 and the cup lid locking portion 1022a more easily locks the connecting rod locking portion 1033, which can further improve the turn-on accuracy of the switch assembly 201 and the accuracy of the locking between the cup lid locking portion 1022a and the connecting rod locking portion 1033, improving the reliability of the safety protection.

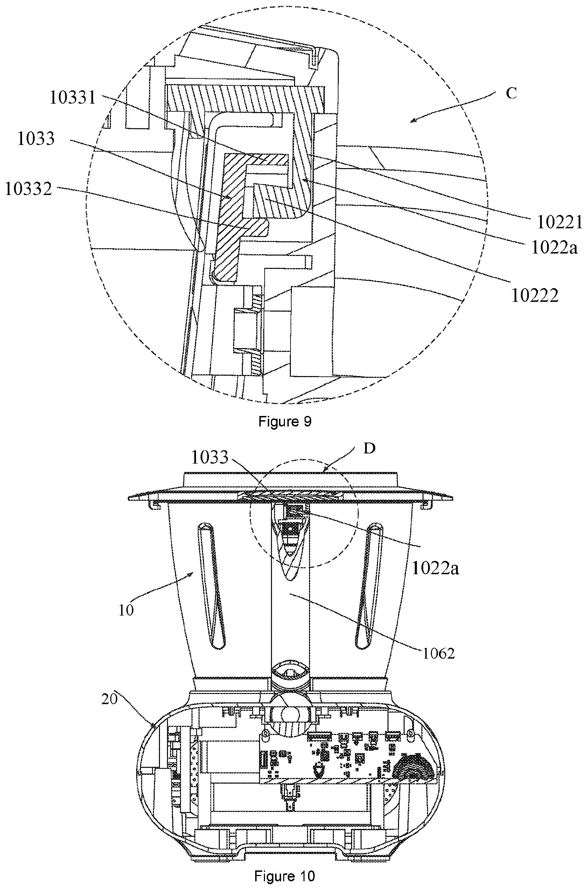

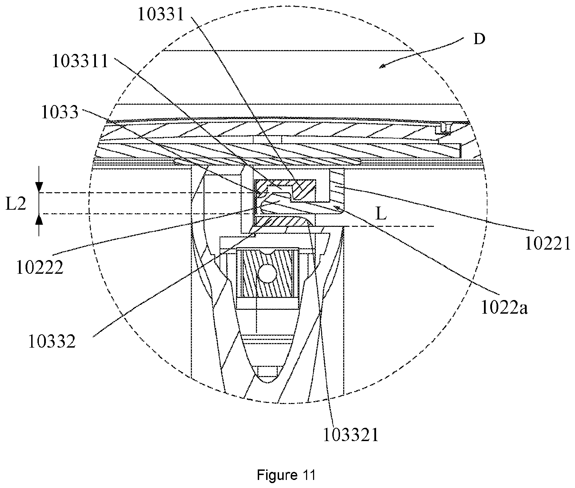

In reference to Figures 2 to 4 and in combination with Figures 9 and 11, the cup lid locking portion 1022a and the connecting rod locking portion 1033 can be of various structures, for example, a hook structure. In some modes of realization, the cup lid locking portion 1022a comprises cup lid connecting portion 10221 (i.e., a lid connecting portion) connected to the cup lid body 1021a and a cup lid hook portion 10222 (i.e., a lid hook portion) connected to the cup lid connecting portion 10221. The cup lid hook portion 10222 is formed by reverse folding with respect to the cup lid connecting portion 10221. The connecting rod locking portion 1033 comprises a connecting rod hook portion 10331 and a guiding portion 10332 both connected to the connecting rod body. The connecting rod hook portion 10331 and the guiding portion 10332 are spaced apart to form a groove 10333 extending in the direction of the width of the connecting rod body 1031. The guiding portion 10332 comprises a second guiding surface 103321 inclined upward from the horizontal plane L, and the cup lid hook portion 10222 is guided by the second guiding surface 103321 into the groove 10333. The connecting rod hook portion 10331 comprises a recess 103311 in communication with the groove 10333. In reference to Figures 10 and 11, when the connecting rod 103 is locked, the cup lid hook portion 10222 extends into the recess 103311. With those provisions, the cup lid 102a is prevented from revolving by the guiding of the second guiding surface 103321 of the guide portion 10332 and the position limiting of the groove 103311, and it is easier for the cup lid locking portion 1022a and the connecting rod locking portion 1033 to lock with each other and for the locking to be stable, improving the reliability of the safety protection.

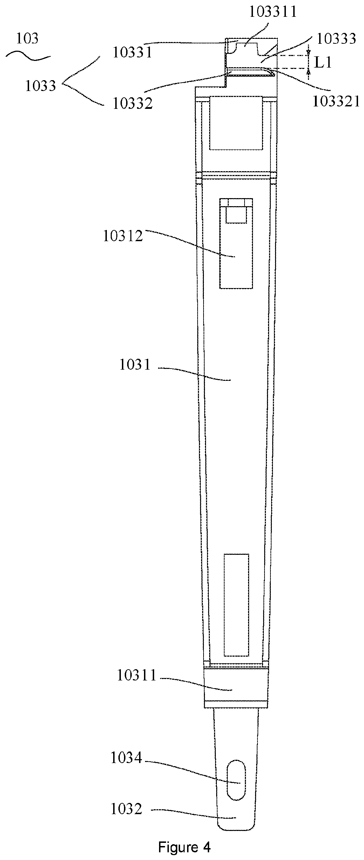

In reference to Figures 4 and 11, in some modes of realization, the groove 10333 has a width L1, and the cup lid hook portion 10222 has a height L2 relative to an end of the cup lid connecting portion 10221, wherein 0 < L1 - L2 ≤ 3 mm. With those provisions, if the difference between L1 and L2 is too big, in the course of the locking of the connecting rod 103 by the connecting rod locking member 1042, the course of the downward movement of the connecting rod 103 will be relatively long, thus the course of the driving member 202 will also become longer due to the fact that the connecting rod 103 is driven to move downward through the inclined surface cooperation, which will cause the locking between the connecting rod locking portion 1033 and the cup lid locking portion 1022a to be inaccurate. For example, with a relatively long course of the connecting rod 103, the relative position between the connecting rod locking portion 1033 and the cup lid locking portion 1022a may be inaccurate during the course of movement, and thus, the cup lid hook portion 10222 of the cup lid locking portion 1022a cannot correctly enter the recess 103311. Therefore, it helps improve the reliability of the safety protection by having 0 < L1 - L2 ≤ 3 mm.

Still in reference to Figures 4 and 11, in a mode of realization, the width L1 of the groove satisfies: 2 mm ≤ L1 ≤8 mm. If the width of the groove 10333 is too small, it will be difficult for the cup lid locking portion 1022a to enter. In addition, when the difference between the two is such that 0 < L1 - L2 ≤ 3 mm, the cup lid locking portion 1022a and the connecting rod locking portion 1033 will be engaged by a small force, thus will be easy to break or disengage, ultimately resulting in the safety protection failure. If the width of the groove is too big, the free space between the cup lid locking portion 1022a and the connecting rod locking portion 1033 will be large, causing the locking between the two to be unstable. Therefore, when 0 < L1 - L2 ≤ 3 mm, it helps improve the reliability of the safety protection by having 2 mm ≤ L1 ≤8 mm.

In reference to Figures 4 and 11, the second guiding surface 103321 is inclined at an angle of 15 degrees to 60 degrees with respect to a horizontal plane, for example, 15 degrees, 18 degrees, 20 degrees, 22 degrees, 25 degrees, 30 degrees, 32 degrees, 35 degrees, 38 degrees, 40 degrees, 41 degrees, 45 degrees, 48 degrees, 50 degrees, 53 degrees, 55 degrees, 57 degrees, or 60 degrees. In the case where the second guiding surface 103321 is a flat surface, the angle refers to the angle between two flat surfaces; when the second guiding surface 103321 is a curved surface, the angle refers to the angle between the tangent of the curved surface and the line in the horizontal direction. If the angle is too big or too small, the following situations may occur: if the angle is too small, the cup lid locking portion 1022a has been locked with the connecting rod locking portion 1033 while the abutting portion 1032 of the connecting rod 103 has not abutted against the switch lever 2011 of the switch assembly 201 to turn on the switch assembly 201, in other words, has not triggered the second course; if the angle is too big, not only will it be difficult for the cup lid locking portion 1022a to be guided into the connecting rod locking portion 1033, but also the abutting portion 1032 of the connecting rod 103 has already triggered the second course while the cup lid locking portion 1022a and the connecting rod locking portion 1033 have not been completely locked in position. Therefore, with the second guiding surface 103321 inclined at an angle of 15 degrees to 60 degrees with respect to the horizontal plane, it helps improve the reliability of the connection between the connecting rod 103 and the switch assembly 201 and the reliability of the locking between the connecting rod 103, the cup lid 102a (the lid), and the connecting rod locking member 1042, thus improving the reliability of the locking of the food processing cup 101 and the reliability of the safety protection.

In the above-described mode of realization, the cup holder 1041 is provided with the connecting rod locking member 1042. A person skilled in the art can understand that in some modes of realization, the cup holder 1041 may not be provided with the connecting rod locking member 1042. In other words, when leaving the factory, the food processing cup assembly does not comprise the connecting rod locking member. Instead, the connecting rod locking member is part of the food processor base 20. For example, in this case, the cup holder comprises a receiving portion for accommodating the connecting rod locking member, which is connected with the driving member. For example, in the case where the driving member comprises an electromagnetic valve and a cylinder, the mode in which the first guiding surface 10421 cooperates with a side wall of the locking hole 1034 is still adopted, and the food processor base is provided with the receiving portion for accommodating the connecting rod locking member. After the food processing cup assembly is placed at the food processor base 20, the driving member 202 drives the connecting rod locking member 1042 to cause the connecting rod locking member 1042 to lock the connecting rod 103.

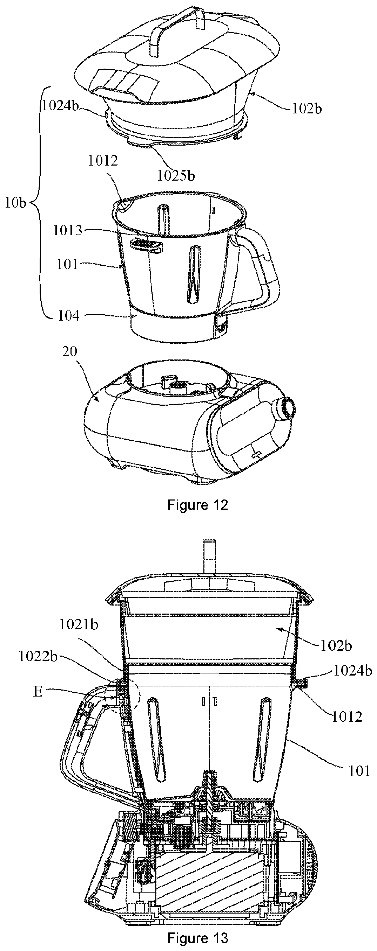

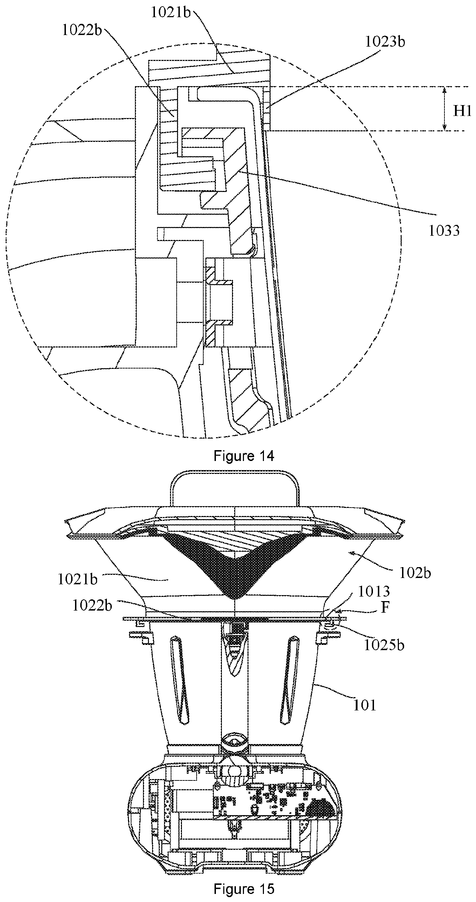

In reference to Figures 12, 13, and 15, the present application further discloses another food processing cup assembly 10b and food processor. In this food processor, the food processing cup assembly 10b differs from the food processing cup assembly 10a mainly in that the lid is the steamer 102b. To facilitate understanding, some parts with the same configuration are referenced. The steamer 102b is to be generally understood as a utensil able to steam food, such as a steam pot. The steamer 102b comprises a steamer body 1021b and a steamer locking portion 1022b. The steamer locking portion 1022b has the same configuration as the cup lid locking portion 1022a. As the only difference is the part placed on the food processing cup 101, one can refer to the above description for how the connecting rod locking member 1042 is locked with with the connecting rod 103 and how the connecting rod locking portion 1033 is locked with the steamer locking portion 1022b, which is not described again.

In reference to Figures 13 to 14, the steamer 102b comprises a steamer body 1021b and a water-retaining rib 1023b all around the steamer body 1021b. As shown in Figure 13, the water-retaining rib 1023b is buckled to the opening portion of the food processing cup 101. The water-retaining rib 1023b can cause water condensed from water vapor to flow back to the inside of the food processing cup 101. In addition, with the water-retaining rib 1023b buckled to the opening portion of the food processing cup 101, the steamer 102b can be fixed on the food processing cup 101, improving the stability of the steamer. In some modes of realization, the water-retaining rib 1023b has a height H1 of 1 mm to 50 mm with respect to the steamer body 1021b. Those provisions ensure the strength of the water-retaining rib 1023b. For example, if the water-retaining rib 1023b is too high, it is easy to deform, resulting in insufficient strength. If the water-retaining rib 1023b is too low, the steamer 102b cannot be stably placed on the food processing cup 101. In sum, by providing the water-retaining rib 1023b and with its height within the above-described range, the steamer 102b can be better fixed.

In reference to Figure 13, the food processing cup 101 comprises a cup mouth 1012 located at the opening portion of the food processing cup 101. The cup mouth 1012 and the connecting rod locking portion 1033 are located at two ends of a diameter of the opening portion of the food processing cup 101. The steamer 102b comprises a steamer body 1021b and a cup mouth hook 1024b provided on the edge of the steamer body 1021b. The cup mouth hook 1024b is hooked with the cup mouth 1012. The cup mouth 1012 can have various forms and configurations and one of its functions is to pour out food inside the food processing cup 101. For example, the cup mouth 1012 comprises cup mouth walls connected with each other and forming a flow slot that gradually becomes narrower towards the direction away from the food processing cup 101 from the opening portion of the cup mouth 1012. The cup mouth hook 1024b can also have various structures so long as it can be hooked with the cup mouth 1012 to fulfill the fixing function. With those provisions, by the hooking between the cup mouth and the cup mouth hook and together with the steamer locking portion and the connecting rod locking portion which are located at two ends of one diameter, the steamer is firmly fixed. In addition, the cup mouth can not only pour out food, but also fulfil the fixing function, thus more functions are integrated. At least the movement of the steamer in the vertical direction is limited by the hooking between the cup mouth 1012 and the cup mouth hook 1024b, while in the circumferential direction of the food processing cup 101, the food processing cup 101, the steamer 102b, and the food processor base 20 are locked by means of the connecting rod 103 and cannot easily rotate in the circumferential direction. Therefore, the above-described provisions allow the steamer 102b be fixed in a stable and firm way.

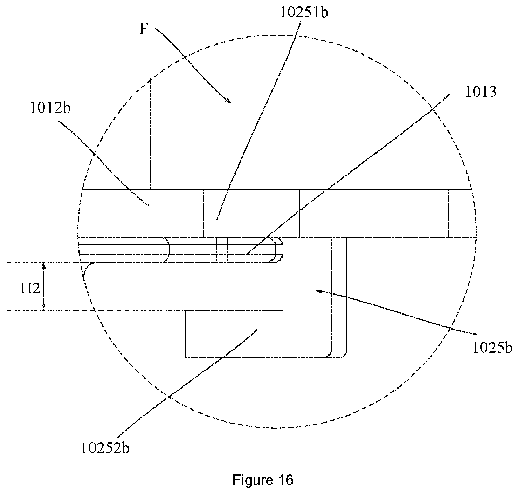

In reference to Figures 12 to 16, in some modes of realization, the food processing cup 101 comprises a lug 1013 located at the opening portion of the food processing cup 101. The line connecting the lug 1013, the cup mouth 1012, and the connecting rod locking portion 1033 in sequence forms a polygon, such as a triangle, a quadrilateral, a pentagon, etc. In the case of a quadrilateral, the diagonals are two diameters that intersect with each other, for example, diameters orthogonal to each other. The steamer 102b comprises a lug hook 1025b provided at the steamer body 1021b. The lug hook 1025b comprises a lug connecting portion 10251b connected with the steamer body 1021b and a reverse-folded portion 10252b facing the lug connecting portion 10251b, wherein a top surface of the lug 1013 abuts against the lug connecting portion 10251b, and a back surface of the lug 1013 is spaced apart from the reverse-folded portion 10252b. With the lug 1013 and the reverse-folded portion 10252b being spaced apart, it is easier for the steamer to be screwed in or screwed out, and the steamer 102b and the food processing cup 101 are fixed firmly in the vertical direction, while in the circumferential direction of the food processing cup 101, the food processing cup 101, the steamer 102b, and the food processor base 20 are locked by means of the connecting rod 103 and cannot easily rotate in the circumferential direction. Therefore, with the lug 1013 and the lug hook 1025b added, the steamer 102b can be fixed more firmly, and the steamer and the food processor cup cannot easily swing relative to each other, rending the safety protection more effective while keeping it easy to screw in and out the steamer 102b. In some modes of realization, the distance by which the two are spaced apart is 0 < H2 ≤ 5mm. When it is in this range, the function of fixing the steamer 102b in the vertical direction can be relatively well fulfilled while permitting the steamer 102b to be screwed in and out conveniently. If H2 is too big, the two are spaced too far apart, thus it is easy to screw in or out but the space of movement between the two in the vertical direction is increased, weakening the fixing.

Of course, based on the above modes of realization, a person skilled in the art can understand that in some modes of realization, the cup mouth 1012 may be omitted, and the steamer 102b can be fixed jointly by the lug 1013, the lug hook 1025b, the lid locking portion (the steamer locking portion 1022b), and the connecting rod locking portion 1033. In this case, the number of the lug 10113 and the lug hook 1025b can be not limited. For example, in the case where there is one lug 1013 and one lug hook 1025b, for example, they replace the cup mouth 1012 and the cup mouth hook 1024b. In the case where there are at least two lugs 1013 and lug hooks 1025b, those lugs 1013 and the connecting rod locking portion 1033 are distributed along the opening portion of the food processing cup 101. Although the relevant structures for the cooperation between the lid and the food processing cup 101 has been described using the example of the steamer, a person skilled in the art can understand that those structures can be provided on the cup lid 102a. When compared to the case where the structures are provided on the steamer 102b, they are the same except being provided on a different object. Therefore, how they are provided is not described again.

Although the above-described modes of realization use the example where the food processor comprises the stirring blade assembly 105, a person skilled in the art can understand that in some modes of realization, the food processor may not be provided with the stirring blade assembly 105. In addition, in the various modes of realization described above, the connecting rod 103 is assembled to a side wall of the food processing cup 101 and covered by the handle 1061. A person skilled in the art can understand that in some modes of realization, the connecting rod 103 can be assembled to the handle.

In modes of realization of the present application, the lid is a part that covers the food processing cup 101. For example, the lid is the cup lid 102a. It can also be the steamer 102b, or a combination of the steamer 102b and the cup lid. In this case, the steamer is located at the cup lid 102a and in communication with the food processing cup 101. Based on this, for example, the cup lid locking portion and the cup lid body correspond to the lid locking portion and the lid body.

What has been described are merely preferred modes of realization of the present application and are not used to limit the present application. Any modification, equivalent replacement, or improvement made within the scope of the appended claims falls within the scope of protection of the present application.

## Claims

1. A food processor comprising a food processor base (20) provided with a switch assembly (201) and a driving member (202), and a food processing cup assembly (10a, 10b) removably assembled on the food processor base (20), wherein the food processing cup assembly comprises:
- a food processing cup (101);
- a lid (102a, 102b) for covering the food processing cup (101) and comprising a lid locking portion (1022a, 1022b);
- a connecting rod (103) comprising a connecting rod body (1031), an abutting portion (1032) and a connecting rod locking portion (1033) located at opposite ends of the connecting rod body (1031); and
- a connecting rod locking member (1042);
wherein when the lid (102a, 102b) is placed in position on the food processing cup (101) and the food processing cup assembly (10a, 10b) is assembled on the food processor base (20), the lid locking portion (1022a, 1022b) presses the connecting rod locking portion (1033) to drive the connecting rod (103) to move downward toward the switch assembly (201), so that the abutting portion (1032) triggers the switch assembly (201) to be turned on; the food processor being **characterized in that** the switch assembly is configured such that when
the switch assembly (201) is turned on, the driving member (202) drives the connecting rod locking member (1042) to drive the connecting rod (103) to continue to move downward, so that the lid locking portion (1022a, 1022b) is locked with the connecting rod locking portion (1033), and the connecting rod locking member (1042) is locked with the connecting rod (103).

2. The food processor according to claim 1 further comprising a cup holder assembly (104) assembled with the food processing cup (101) and comprising a cup holder (1041), wherein the connecting rod locking member (1042) is assembled to the cup holder (1041), or the cup holder (1041) comprises a receiving portion for accommodating the connecting rod locking member (1042) connected with the driving member (202).

3. The food processor according to claim 2, wherein the connecting rod body (1031) is provided with a locking hole (1034) through the connecting rod body (1031), and the connecting rod locking member (1042) comprises a first guiding surface (10421) inclined downward with respect to the locking hole (1034), and wherein the connecting rod locking member (1042) is configured to be pushed by the driving member (202) to move in a horizontal direction such that the first guiding surface (10421) moves into the locking hole (1034) while making the connecting rod (103) continue to move downward.

4. The food processor according to claim 3, wherein the first guiding surface (10421) is inclined at an angle of 15 degrees to 60 degrees with respect to a horizontal plane.

5. The food processor according to claim 3 or 4, wherein a locking member return spring (1043) is provided between the cup holder (1041) and the connecting rod locking member (1042) and configured to be compressed when the connecting rod locking member (1042) is in a locked state and to exert a force to the connecting rod locking member (1042) after the driving member (202) is powered off to reset the connecting rod locking member (1042); and/or
a connecting rod return spring (107) is provided between the connecting rod locking member (1042) and the connecting rod body (1031) and configured to be compressed when the connecting rod (103) is locked and to exert a force to the connecting rod (103) to reset the connecting rod (103) when the connecting rod locking member (1042) is reset.

6. The food processor according to any one of the preceding claims, wherein the food processing cup (101) is provided at its side wall with a guide protrusion (1011), and the connecting rod body (1031) is provided with a connecting rod slot (10312), the guide protrusion (1011) being located in the connecting rod slot (10312), and the connecting rod slot (10312) having a length in a length direction of the connecting rod body (1031) greater than that of the guide protrusion (1011) in the length direction of the connecting rod body (1031), the connecting rod (103) being movable relative to the guide protrusion (1011) to be guided by the guide protrusion (1011); and/or
the connecting rod locking member (1042) is provided with a through hole (10422), and the abutting portion (1032) passes through the through hole (10422) .

7. The food processor according to any one of the preceding claims, wherein the connecting rod body (1031) contacts a side wall of the food processing cup (101) so as to move along the side wall of the food processing cup (101).

8. The food processor according to any one of the preceding claims, wherein the lid (102a, 102b) comprises a lid body (1021a, 1021b), and the lid locking portion (1022a, 1022b) comprises a lid connecting portion (10221) connected to the lid body (1021a, 1021b) and a lid hook portion (10222) connected to the lid connecting portion;
wherein the connecting rod locking portion (1033) comprises a connecting rod hook portion (10331) and a guiding portion (10332) both connected to the connecting rod body (1031) and spaced apart to form a groove (10333) extending in a width direction of the connecting rod body, and wherein the guiding portion (10332) comprises a second guiding surface (103321) inclined upward from a horizontal plane, the lid hook portion (10222) being configured to be guided by the second guiding surface (103321) into the groove (10333); and
wherein the connecting rod hook portion (10331) comprises a recess (103311) in communication with the groove (10333), and when the connecting rod (103) is locked, the lid hook portion (10222) extends into the recess (103311).

9. The food processor according to claim 8, wherein the groove (10333) has a width L1, and the lid hook portion (10222) has a height L2 relative to an end of the lid connecting portion (10221), wherein 0 < L1 - L2 ≤ 3 mm, preferably, the width L1 of the groove (10333) satisfies: 2 mm ≤ L1 ≤ 8 mm.

10. The food processor according to any one of claims 8 to 9, wherein the second guiding surface (103321) is inclined at an angle of 15 degrees to 60 degrees with respect to a horizontal plane.

11. The food processor according to any one of the preceding claims, wherein the food processing cup (101) comprises a cup mouth (1012) located at an opening portion of the food processing cup (101), the cup mouth (1012) and the connecting rod locking portion (1033) being located at two ends of a diameter of the opening portion of the food processing cup (101); and wherein the lid (102a, 102b) comprises a lid body and a cup mouth hook (1024b) arranged on the edge of the lid body, the cup mouth hook (1024b) being configured to be buckled with the cup mouth (1012) .

12. The food processor according to claim 11, wherein the food processing cup (101) comprises a lug (1013) located at the opening portion of the food processing cup, a line connecting the lug (1013), the cup mouth (1012) and the connecting rod locking portion (1033) in sequence forming a polygon, wherein the lid (102a, 102b) comprises a lug hook (1025b) provided at the lid body (1021a, 1021b) and comprising a lug connecting portion (10251b) connected with the lid body (1021a, 1021b) and a reverse-folded portion facing the lug connecting portion (10251b) (10252b), and wherein when the lug (1013) is buckled with the lug hook (1025b), a top surface of the lug (1013) fits the lug connecting portion (10251b), and a back surface of the lug (1013) is spaced apart from the reverse-folded portion (10252b).

13. The food processor according to any one of claims 1 to 11, wherein the food processing cup comprises a lug (1013) located at an opening portion of the food processing cup (101), and the lid (102a, 102b) comprises a lug hook (1025b) which comprises a lug connecting portion (10251b) located at an edge of the lid (102a, 102b) and a reverse-folded portion (10252b) facing the lug connecting portion (10251b); and wherein when the lug (1013) is buckled with the lug hook (1025b), a top surface of the lug (1013) fits the lug connecting portion (10251b), and a back surface of the lug (1013) is spaced apart from the reverse-folded portion (10252b) so as to fix the lid (102a, 102b) jointly with the lid locking portion (10) and the connecting rod locking portion (1033).

14. The food processor according to claim 12 or 13, wherein the back face of the lug (1013) is spaced apart from the reverse-folded portion (10252b) by a distance H2, wherein 0<H2≤5mm.

15. The food processor according to any one of the preceding claims, wherein the lid is or comprises a steamer (102b) having a steamer body (1021b) and a water-retaining rib (1023b) all around the steamer body (1021b), the water-retaining rib (1023b) being configured to be buckled to an opening portion of the food processing cup (101) and having a height of 1mm to 50mm relative to the steamer body (1021b).

## Patentansprüche

1. Küchenmaschine, aufweisend eine Küchenmaschinenbasis (20), die mit einer Schalteranordnung (201) und einem Antriebselement (202) versehen ist, und eine Schüsselanordnung zur Lebensmittelverarbeitung (10a, 10b), die abnehmbar an der Küchenmaschinenbasis (20) angebracht ist, wobei die Schüsselanordnung zur Lebensmittelverarbeitung Folgendes aufweist:
- eine Schüssel zur Lebensmittelverarbeitung (101);
- einen Deckel (102a, 102b) zum Abdecken der Schüssel zur Lebensmittelverarbeitung (101), der einen Deckelverriegelungsabschnitt (1022a, 1022b) aufweist;
- eine Verbindungsstange (103), die einen Verbindungsstangenkörper (1031), einen Anschlagabschnitt (1032) und einen Verbindungsstangen-Verriegelungsabschnitt (1033) aufweist, die sich an gegenüberliegenden Enden des Verbindungsstangenkörpers (1031) befinden; und
- ein Verbindungsstangen-Verriegelungselement (1042);
wobei, wenn der Deckel (102a, 102b) in Position auf der Schüssel zur Lebensmittelverarbeitung (101) platziert ist und die Schüsselanordnung zur Lebensmittelverarbeitung (10a, 10b) auf der Basis (20) der Küchenmaschine zusammengebaut ist, der Deckelverriegelungsabschnitt (1022a, 1022b) den Verbindungsstangen-Verriegelungsabschnitt (1033) drückt, um die Verbindungsstange (103) anzutreiben, damit sie sich nach unten in Richtung der Schalteranordnung (201) bewegt, so dass der Anschlagabschnitt (1032) die Schalteranordnung (201) auslöst, um eingeschaltet zu werden; die Küchenmaschine **dadurch gekennzeichnet ist, dass** die Schalteranordnung so konfiguriert ist, dass, wenn die Schalteranordnung (201) eingeschaltet ist, das Antriebselement (202) das Verbindungsstangen-Verriegelungselement (1042) antreibt, um die Verbindungsstange (103) anzutreiben, damit sie sich weiter nach unten bewegt, so dass der Deckelverriegelungsabschnitt (1022a, 1022b) mit dem Verbindungsstangen-Verriegelungsabschnitt (1033) verriegelt wird und das Verbindungsstangen-Verriegelungselement (1042) mit der Verbindungsstange (103) verriegelt ist.

2. Küchenmaschine nach Anspruch 1, die ferner eine Schüsselhalteranordnung (104) aufweist, die mit der Schüssel zur Lebensmittelverarbeitung (101) zusammengebaut ist und einen Schüsselhalter (1041) aufweist, wobei das Verbindungsstangen-Verriegelungselement (1042) mit dem Schüsselhalter (1041) zusammengebaut ist,
oder der Schüsselhalter (1041) einen Aufnahmeabschnitt zum Aufnehmen des mit dem Antriebselement (202) verbundenen Verbindungsstangen-Verriegelungselement (1042) aufweist.

3. Küchenmaschine nach Anspruch 2, wobei der Verbindungsstangenkörper (1031) mit einem Verriegelungsloch (1034) durch den Verbindungsstangenkörper (1031) versehen ist, und das Verbindungsstangen-Verriegelungselement (1042) eine erste Führungsfläche (10421) aufweist, die in Bezug auf das Verriegelungsloch (1034) nach unten geneigt ist, und wobei das Verbindungsstangen-Verriegelungselement (1042) so konfiguriert ist, dass es durch das Antriebselement (202) geschoben wird, um sich in einer horizontalen Richtung zu bewegen, so dass sich die erste Führungsfläche (10421) in das Verriegelungsloch (1034) bewegt, während die Verbindungsstange (103) veranlasst wird, sich weiter nach unten zu bewegen.

4. Küchenmaschine nach Anspruch 3, wobei die erste Führungsfläche (10421) in einem Winkel von 15 Grad bis 60 Grad gegenüber einer horizontalen Ebene geneigt ist.

5. Küchenmaschine nach Anspruch 3 oder 4, wobei eine Rückstellfeder (1043) für das Verriegelungselement zwischen dem Schüsselhalter (1041) und dem Verbindungsstangen-Verriegelungselement (1042) für die Verbindungsstange vorgesehen ist und so konfiguriert ist, dass sie zusammengedrückt wird, wenn sich das Verbindungsstangen-Verriegelungselement (1042) in einem verriegelten Zustand befindet, und dass sie eine Kraft auf das Verbindungsstangen-Verriegelungselement (1042) ausübt, nachdem das Antriebselement (202) ausgeschaltet wurde, um das Verbindungsstangen-Verriegelungselement (1042) zurückzustellen; und/oder
eine Verbindungsstangen-Rückstellfeder (107) zwischen dem Verbindungsstangen-Verriegelungselement (1042) und dem Verbindungsstangenkörper (1031) vorgesehen ist und so konfiguriert ist, dass sie zusammengedrückt wird, wenn die Verbindungsstange (103) verriegelt ist, und eine Kraft auf die Verbindungsstange (103) ausübt, um die Verbindungsstange (103) zurückzustellen, wenn das Verbindungsstangen-Verriegelungselement (1042) zurückgestellt wird.

6. Küchenmaschine nach einem der vorhergehenden Ansprüche, wobei die Schüssel zur Lebensmittelverarbeitung (101) an ihrer Seitenwand mit einem Führungsvorsprung (1011) versehen ist, und der Verbindungsstangenkörper (1031) mit einem Verbindungsstangenschlitz (10312) versehen ist, wobei der Führungsvorsprung (1011) in dem Verbindungsstangenschlitz (10312) angeordnet ist, und der Verbindungsstangenschlitz (10312) eine Länge in einer Längsrichtung des Verbindungsstangenkörpers (1031) aufweist, die größer ist als die des Führungsvorsprungs (1011) in der Längsrichtung des Verbindungsstangenkörpers (1031), wobei die Verbindungsstange (103) relativ zu dem Führungsvorsprung (1011) beweglich ist, um von dem Führungsvorsprung (1011) geführt zu werden; und/oder das Verbindungsstangen-Verriegelungselement (1042) mit einem Durchgangsloch (10422) versehen ist und der Anschlagabschnitt (1032) durch das Durchgangsloch (10422) hindurchgeht.

7. Küchenmaschine nach einem der vorhergehenden Ansprüche, wobei der Verbindungsstangenkörper (1031) eine Seitenwand der Schüssel zur Lebensmittelverarbeitung (101) berührt, so dass er sich entlang der Seitenwand der Schüssel zur Lebensmittelverarbeitung (101) bewegt.

8. Küchenmaschine nach einem der vorhergehenden Ansprüche, wobei der Deckel (102a, 102b) einen Deckelkörper (1021a, 1021b) aufweist, und der Deckelverriegelungsabschnitt (1022a, 1022b) einen Deckelverbindungsabschnitt (10221), der mit dem Deckelkörper (1021a, 1021b) verbunden ist, und einen Deckelhakenabschnitt (10222), der mit dem Deckelverbindungsabschnitt verbunden ist, aufweist; wobei der Verbindungsstangen-Verriegelungsabschnitt (1033) einen Verbindungsstangen-Hakenabschnitt (10331) und einen Führungsabschnitt (10332) aufweist, die beide mit dem Verbindungsstangenkörper (1031) verbunden und voneinander beabstandet sind, um eine Nut (10333) zu bilden, die sich in einer Breitenrichtung des Verbindungsstangenkörpers erstreckt, und wobei der Führungsabschnitt (10332) eine zweite Führungsfläche (103321) aufweist, die von einer horizontalen Ebene nach oben geneigt ist, wobei der Deckelhakenabschnitt (10222) so konfiguriert ist, dass er von der zweiten Führungsfläche (103321) in die Nut (10333) geführt wird; und
wobei der Verbindungsstangen-Hakenabschnitt (10331) eine Aussparung (103311) aufweist, die mit der Nut (10333) in Verbindung steht, und wenn die Verbindungsstange (103) verriegelt ist, sich der Deckelhakenabschnitt (10222) in die Aussparung (103311) erstreckt.

9. Küchenmaschine nach Anspruch 8, wobei die Nut (10333) eine Breite L1 hat und der Deckelhakenabschnitt (10222) eine Höhe L2 relativ zu einem Ende des Deckelverbindungsabschnitts (10221) hat, wobei 0 < L1 - L2 ≤ 3 mm, vorzugsweise die Breite L1 der Nut (10333): 2 mm ≤ L1 ≤ 8 mm erfüllt.

10. Küchenmaschine nach einem der Ansprüche 8 bis 9, wobei die zweite Führungsfläche (103321) in einem Winkel von 15 Grad bis 60 Grad gegenüber einer horizontalen Ebene geneigt ist.

11. Küchenmaschine nach einem der vorhergehenden Ansprüche, wobei die Schüssel zur Lebensmittelverarbeitung (101) eine Schüsselmündung (1012) aufweist, die an einem Öffnungsabschnitt der Schüssel zur Lebensmittelverarbeitung (101) angeordnet ist, wobei die Schüsselmündung (1012) und der Verbindungsstangen-Verriegelungsabschnitt (1033) an zwei Enden eines Durchmessers des Öffnungsabschnitts der Schüssel zur Lebensmittelverarbeitung (101) angeordnet sind; und wobei der Deckel (102a, 102b) einen Deckelkörper und einen Schüsselmündungshaken (1024b) aufweist, der an der Kante des Deckelkörpers angeordnet ist, wobei der Schüsselmündungshaken (1024b) so konfiguriert ist, dass er mit der Schüsselmündung (1012) geknickt wird.

12. Küchenmaschine nach Anspruch 11, wobei die Schüssel zur Lebensmittelverarbeitung (101) einen Ansatz (1013) aufweist, der sich am Öffnungsabschnitt der Schüssel zur Lebensmittelverarbeitung befindet, wobei eine Linie, die den Ansatz (1013), die Schüsselmündung (1012) und den Verbindungsstangen-Verriegelungsabschnitt (1033) nacheinander verbindet, ein Vieleck bildet, wobei der Deckel (102a, 102b) einen Laschenhaken (1025b), der an dem Deckelkörper (1021a, 1021b) vorgesehen ist und einen Laschenverbindungsabschnitt (10251b), der mit dem Deckelkörper (1021a, 1021b) verbunden ist, und einen rückwärts umgefalteten Abschnitt (10252b), der dem Laschenverbindungsabschnitt (10251b) zugewandt ist, aufweist und wobei, wenn die Lasche (1013) mit dem Laschenhaken (1025b) verschnallt ist, eine obere Fläche der Lasche (1013) an den Laschenverbindungsabschnitt (10251b) passt und eine hintere Fläche der Lasche (1013) von dem umgefalteten Abschnitt (10252b) beabstandet ist.

13. Küchenmaschine nach einem der Ansprüche 1 bis 11, wobei die Schüssel zur Lebensmittelverarbeitung eine Lasche (1013) aufweist, die an einem Öffnungsabschnitt der Schüssel zur Lebensmittelverarbeitung (101) angeordnet ist, und der Deckel (102a, 102b) einen Laschenhaken (1025b) aufweist, der einen Laschenverbindungsabschnitt (10251b), der an einer Kante des Deckels (102a, 102b) angeordnet ist, und einen umgefalteten Abschnitt (10252b) aufweist, der dem Laschenverbindungsabschnitt (10251b) gegenüberliegt; und wobei, wenn die Lasche (1013) mit dem Laschenhaken (1025b) verschnallt ist, eine obere Fläche der Lasche (1013) zu dem Laschenverbindungsabschnitt (10251b) passt und eine hintere Fläche der Lasche (1013) von dem umgefalteten Abschnitt (10252b) beabstandet ist, um den Deckel (102a, 102b) gemeinsam mit dem deckelseitigen Abschnitt (10) und dem Verbindungsstangen-Verriegelungsabschnitt (1033) zu befestigen.

14. Küchenmaschine nach Anspruch 12 oder 13, wobei die Rückseite der Lasche (1013) von dem rückwärts umgefalteten Abschnitt (10252b) um einen Abstand H2 beabstandet ist, wobei 0 < H2 ≤ 5 mm.

15. Küchenmaschine nach einem der vorhergehenden Ansprüche, wobei der Deckel ein Dampfer (102b) mit einem Dampferkörper (1021b) und einer Wasserrückhalterippe (1023b) rund um den Dampferkörper (1021b) ist oder aufweist, wobei die Wasserrückhalterippe (1023b) so konfiguriert ist, dass sie an einen Öffnungsabschnitt der Schüssel zur Lebensmittelverarbeitung (101) geknickt werden kann und eine Höhe von 1 mm bis 50 mm relativ zum Dampferkörper (1021b) aufweist.

## Revendications

1. Un robot culinaire comprenant une base (20) de robot culinaire dotée d'un ensemble commutateur (201) et d'un élément d'entraînement (202), et un ensemble bol de traitement d'aliments (10a, 10b) assemblé de manière amovible sur la base (20) de robot culinaire, l'ensemble bol de traitement d'aliments comprenant :
- un bol (101) de traitement d'aliments ;
- un couvercle (102a, 102b) destiné à recouvrir le bol (101) de traitement d'aliments et comprenant une partie (1022a, 1022b) de verrouillage de couvercle ;
- une tige de liaison (103) comprenant un corps (1031) de tige de liaison, une partie de butée (1032) et une partie (1033) de verrouillage de tige de liaison située aux extrémités opposées du corps (1031) de tige de liaison ; et
- un élément (1042) de verrouillage de tige de liaison ;
lorsque le couvercle (102a, 102b) est placé en position sur le bol (101) de traitement d'aliments et que l'ensemble bol de traitement d'aliments (10a, 10b) est assemblé sur la base (20) de robot culinaire, la partie (1022a, 1022b) de verrouillage de couvercle appuie sur la partie (1033) de verrouillage de tige de liaison de façon à entraîner la tige de liaison (103) à se déplacer vers le bas en direction de l'ensemble commutateur (201), de sorte que la partie de butée (1032) amène l'ensemble commutateur (201) en position d'activation ; le robot culinaire étant **caractérisé en ce que** l'ensemble commutateur est configuré de telle sorte que lorsque l'ensemble commutateur (201) est activé, l'élément d'entraînement (202) entraîne l'élément (1042) de verrouillage de tige de liaison de façon à entraîner la tige de liaison (103) afin de continuer à se déplacer vers le bas, de sorte que la partie (1022a, 1022b) de verrouillage de couvercle est verrouillée avec la partie (1033) de verrouillage de tige de liaison, et l'élément (1042) de verrouillage de tige de liaison est verrouillé avec la tige de liaison (103).

2. Le robot culinaire selon la revendication 1, comprenant en outre un ensemble porte-bol (104) assemblé avec le bol (101) de traitement d'aliments et comprenant un porte-bol (1041), l'élément (1042) de verrouillage de tige de liaison étant assemblé au porte-bol (1041), ou le porte-bol (1041) comprenant une partie de réception pour recevoir l'élément (1042) de verrouillage de tige de liaison relié à l'élément d'entraînement (202).

3. Le robot culinaire selon la revendication 2, dans lequel le corps (1031) de tige de liaison est pourvu d'un trou de verrouillage (1034) à travers le corps (1031) de tige de liaison, et l'élément (1042) de verrouillage de tige de liaison comprend une première surface de guidage (10421) inclinée vers le bas par rapport au trou de verrouillage (1034), et dans lequel l'élément (1042) de verrouillage de tige de liaison est configuré pour être poussé par l'élément d'entraînement (202) de façon à se déplacer dans une direction horizontale de telle sorte que la première surface de guidage (10421) se déplace dans le trou de verrouillage (1034) tout en agissant de façon que la tige de liaison (103) continue à descendre.

4. Le robot culinaire selon la revendication 3, dans lequel la première surface de guidage (10421) est inclinée selon un angle de 15 degrés à 60 degrés par rapport à un plan horizontal.

5. Le robot culinaire selon la revendication 3 ou la revendication 4, dans lequel un ressort (1043) de rappel d'élément de verrouillage est prévu entre le porte-bol (1041) et l'élément (1042) de verrouillage de tige de liaison et est configuré pour être comprimé lorsque l'élément (1042) de verrouillage de tige de liaison est dans un état verrouillé et pour exercer une force sur l'élément (1042) de verrouillage de tige de liaison après que l'élément d'entraînement (202) ait été mis hors tension de façon à réinitialiser l'élément (1042) de verrouillage de tige de liaison ; et/ou
un ressort (107) de rappel de tige de liaison est disposé entre l'élément (1042) de verrouillage de tige de liaison et le corps (1031) de tige de liaison et configuré pour être comprimé lorsque la tige de liaison (103) est verrouillée et pour exercer une force sur la tige de liaison (103) de façon à réinitialiser la tige de liaison (103) lorsque l'élément (1042) de verrouillage de tige de liaison est réinitialisé.

6. Le robot culinaire selon l'une quelconque des revendications précédentes, dans lequel le bol (101) de traitement alimentaire est doté au niveau de sa paroi latérale d'une saillie de guidage (1011), et le corps (1031) de tige de liaison présente une fente (10312) de tige de liaison, la saillie de guidage (1011) étant située dans la fente (10312) de tige de liaison, et la fente (10312) de tige de liaison ayant une longueur dans la direction de la longueur du corps (1031) de tige de liaison supérieure à celle du une saillie de guidage (1011) dans la direction de la longueur du corps (1031) de tige de liaison, la tige de liaison (103) étant mobile par rapport à la saillie de guidage (1011) de façon à être guidée par la saillie de guidage (1011) ; et/ou
l'élément (1042) de verrouillage de tige de liaison est pourvu d'un trou traversant (10422), et la partie de butée (1032) passe à travers le trou traversant (10422).

7. Le robot culinaire selon l'une quelconque des revendications précédentes, dans lequel le corps (1031) de tige de liaison vient en contact avec une paroi latérale du bol (101) de traitement d'aliments de manière à se déplacer le long de la paroi latérale du bol (101) de traitement d'aliments.

8. Le robot culinaire selon l'une quelconque des revendications précédentes, dans lequel le couvercle (102a, 102b) comprend un corps (1021a, 1021b) de couvercle, et la partie (1022a, 1022b) de verrouillage de couvercle comprend une partie (10221) de liaison de couvercle reliée au corps (1021a, 1021b) de couvercle et une partie en crochet (10222) de couvercle reliée à la partie de connexion de couvercle ;
la partie (1033) de verrouillage de tige de liaison comprend une partie en crochet (10331) de tige de liaison et une partie de guidage (10332), toutes deux reliées au corps (1031) de tige de liaison et espacées pour former une rainure (10333) s'étendant dans la direction de la largeur du corps de tige de liaison, et la partie de guidage (10332) comprend une deuxième surface de guidage (103321) inclinée vers le haut depuis un plan horizontal, la partie en crochet (10222) de couvercle étant configurée pour être guidée par la deuxième surface de guidage (103321) jusque dans la rainure (10333) ; et
la partie en crochet (10331) de tige de liaison comprend un évidement (103311) en communication avec la rainure (10333), et lorsque la tige de liaison (103) est verrouillée, la partie en crochet (10222) de couvercle s'étend dans l'évidement (103311).

9. Le robot culinaire selon la revendication 8, dans lequel la rainure (10333) a une largeur L1, et la partie en crochet (10222) de couvercle a une hauteur L2 par rapport à une extrémité de la partie (10221) de liaison de couvercle, avec 0 < L1 - L2 ≤ 3 mm, de préférence, la largeur L1 de la rainure (10333) satisfaisant : 2 mm ≤ L1 ≤ 8 mm.

10. Le robot culinaire selon l'une quelconque des revendications 8 à 9, dans lequel la deuxième surface de guidage (103321) est inclinée d'un angle allant de 15 degrés à 60 degrés par rapport à un plan horizontal.

11. Le robot culinaire selon l'une quelconque des revendications précédentes, dans lequel le bol (101) de traitement d'aliments comprend une embouchure de bol (1012) située au niveau d'une partie d'ouverture du bol (101) de traitement d'aliments, l'embouchure de bol (1012) et la partie (1033) de verrouillage de tige de liaison étant située aux deux extrémités d'un diamètre de la partie d'ouverture du bol (101) de traitement d'aliments ; et le couvercle (102a, 102b) comprenant un corps de couvercle et un crochet (1024b) d'embouchure de bol agencé sur le bord du corps de couvercle, le crochet (1024b) d'embouchure de bol étant configuré pour être assemblé par bouclage à l'embouchure de bol (1012).

12. Le robot culinaire selon la revendication 11, dans lequel le bol (101) de traitement d'aliments comprend une patte (1013) située au niveau de la partie d'ouverture du bol de traitement d'aliments, une ligne reliant la patte (1013), l'embouchure du bol (1012) et la partie (1033) de verrouillage de tige de liaison formant en séquence un polygone, le couvercle (102a, 102b) comprenant un crochet (1025b) de patte prévu au niveau du corps (1021a, 1021b) de couvercle et comprenant une partie (10251b) de connexion de patte reliée au corps (1021a, 1021b) de couvercle et une partie (10252b) pliée vers l'envers tournée vers la partie (10251b) de connexion de patte, et lorsque la patte (1013) est assemblée par bouclage avec le crochet de patte (1025b), une surface supérieure de la patte (1013) venant en engagement ajusté avec la partie (10251b) de connexion de patte, et une surface arrière de la patte (1013) est espacée de la partie (10252b) pliée vers l'envers.

13. Le robot culinaire selon l'une quelconque des revendications 1 à 11, dans lequel le bol de traitement d'aliments comprend une patte (1013) située au niveau d'une partie d'ouverture du bol (101) de traitement d'aliments, et le couvercle (102a, 102b) comprend un crochet (1025b) de patte qui comprend une partie (10251b) de connexion de patte située au niveau d'un bord du couvercle (102a, 102b) et une partie (10252b) pliée vers l'envers tournée vers la partie (10251b) de connexion de patte ; et dans lequel, lorsque la patte (1013) est assemblée par bouclage avec le crochet (1025b) de patte, une surface supérieure de la patte (1013) vient en engagement ajusté avec la partie (10251b) de connexion de patte, et une surface arrière de la patte (1013) est espacée du partie (10252b) pliée vers l'envers de manière à fixer le couvercle (102a, 102b) de façon jointive avec la partie (10) de verrouillage de couvercle et la partie (1033) de verrouillage de tige de liaison.

14. Le robot culinaire selon la revendication 12 ou la revendication 13, dans lequel la face arrière de la patte (1013) est espacée de la partie (10252b) pliée vers l'envers, d'une distance H2, avec 0 < H2 ≤ 5 mm.

15. Le robot culinaire selon l'une quelconque des revendications précédentes, dans lequel le couvercle est ou comprend un cuiseur vapeur (102b) ayant un corps (1021b) de cuiseur vapeur et une nervure (1023b) de retenue d'eau tout autour du corps (1021b) de cuiseur vapeur, la nervure (1023b) de retenue d'eau étant configurée pour être assemblée par bouclage à une partie d'ouverture du bol (101) de traitement d'aliments et ayant une hauteur de 1 mm à 50 mm par rapport au corps (1021b) du cuiseur vapeur.
